**Europäisches Patentamt**

**European Patent Office**

**Office européen des brevets**

(19)

(11) Veröffentlichungsnummer: **0 004 060
B1**

(12) **EUROPÄISCHE PATENTSCHRIFT**

(45) Veröffentlichungstag der Patentschrift:
**29.09.82**

(51) Int. Cl.³: **F 24 J 3/02**

(21) Anmeldenummer: **79100662.0**

(22) Anmeldetag: **06.03.79**

(54) **Sonnenkollektor.**

(30) Priorität: **07.03.78 AT 1595/78**

(43) Veröffentlichungstag der Anmeldung:
**19.09.79 Patentblatt 79/19**

(45) Bekanntmachung des Hinweises auf die Patenterteilung:
**29.09.82 Patentblatt 82/39**

(84) Benannte Vertragsstaaten:
**CH DE FR GB IT NL SE**

(56) Entgegenhaltungen:
**DE-A-2 554 095**
**DE-A-2 617 452**
**DE-A-2 622 023**
**DE-U-7 537 207**
**DE-U-7 720 646**
**FR-A-2 345 673**
**GB-A-1 515 935**
**GB-A-1 516 262**
**US-A-4 038 965**
**US-A-4 051 835**
**US-A-4 068 652**

**«SUN POWER» Seite 117, J.C. Mc VEIGH, 1977, Pergomon Press.**

(73) Patentinhaber: **Rodler, Hans, Bahnhofplatz 3,
D-8228 Freilassing (DE)**

(72) Erfinder: **Rodler, Hans, Bahnhofplatz 3,
D-8228 Freilassing (DE)**

## Sonnenkollektor

Die Erfindung betrifft einen Sonnenkollektor bestehend aus einem Kollektorrohr, welches einstückig mit einem dieses umgebenden, durchsichtigen Abdeckkörper und mit zwischen Kollektorrohr und Abdeckkörper angeordneten Stegen aus Kunststoff durch Extrusion hergestellt ist, wobei zwischen Kollektorrohr und Abdeckkörper ein Lufthohlraum gebildet ist und das Kollektorrohr zur Aufnahme eines durchfliessenden, flüssigen, die Sonnenenergie aufnehmenden Mediums dient.

Sonnenkollektoren müssen, um einen guten Wirkungsgrad zu erzielen, mit einer strahlendurchlässigen, wärmeisolierenden Abdeckung versehen sein, wobei der die Kollektorflüssigkeit aufnehmende Teil selbst wärmeabsorbierend sein muss.

Es sind Solarkollektoren aus transparentem Kunststoff bekannt (DE-A-2 617 452, Tabor). Diese sind aus mehreren Gehäusen und aus Schottelementen in Metall oder Kunststoff, die als Absorber dienen und dazwischen liegen, zusammengesetzt, so dass zur Herstellung mehrere Arbeitsgänge und mehrere Abdichtungen zwischen den einzelnen Flächen erforderlich sind.

Sonnenkollektoren mit einem Abdeckrohr aus Glas sind aus der DE-A-2 523 965 bekannt. Bei diesen Kollektoren ist der Raum zwischen äusserem und innerem Rohr evakuiert und vakuumdicht verschlossen. Derartige Kollektoren ergeben einen komplizierten Aufbau. Weiter sind Sonnenkollektoren aus Kunststoffolien zusammengeschweisst bekannt (DE-A-2 515 398). Dieser Kollektor ist besonders als transportable Einrichtung gedacht.

Bei der FR-A-2 345 673 sind die die Sonnenkollektoren umgebenden Abdeckgehäuse mit Nut- und Federausnehmungen an den Längsseiten versehen. Da aber Kollektor und Abdeckeinheiten getrennt sind, ergeben sich trotzdem umständliche Montagearbeiten.

Bei der DE-U-7 720 646 sind die die Abdeckung und die streifenförmigen Absorber aufnehmenden Kollektorrohre nicht aus einem Stück, so dass, um die für unsere Breitengrade erforderliche Wärmedämmung zu erhalten, zusätzliche Abdeckungen aufgebracht werden müssen.

In der DE-A-2 554 095 ist ein mit Hilfe einer Strangpresse hergestelltes, doppelwandiges durchsichtiges Kunststoffrohr gemäss dem ersten Teil des Anspruches 1 beschrieben, bei dem das innere Rohr durch schwarze Färbung als Absorber dient, wobei der innere Durchmesser wesentlich kleiner als der äussere abdeckende Durchmesser ist, so dass nur ein Teil der Sonnenstrahlung, nämlich der, der diese innere Rohrwandung trifft, in Wärme umgewandelt wird.

Auf Seite 117 des Buches «Sun Power» von J.C. Mc VEIGH, 1977, Pergamon Press, wird eine «Fresnel lens» zur Konzentration der Solarenergie auf einen rohrförmigen Absorberkollektor beschrieben. Bei dieser Anordnung müssen Metallrohre als Absorber als Kollektor verwendet werden, da durch die hohe Energiedichte Kunststoffrohre einer zu hohen Wärmebelastung ausgesetzt wären. Der einstückige Aufbau dieser Anordnung ist daher ebenfalls nicht möglich.

Der Erfindung liegt demgegenüber die Aufgabe zugrunde, eine Vorrichtung der eingangs genannten Art so auszubilden, dass sie einen grossen Wirkungsgrad aufweist und ausserdem eine preisgünstige Herstellung ermöglicht.

Die erfindungsgemässe Lösung dieser Aufgabe ist gekennzeichnet durch die Kombination folgender Merkmale:

a) das Kollektorrohr besteht aus mehreren nebeneinanderliegenden Rohren aus durchsichtigem Kunststoff,

b) der Abdeckkörper weist einen rechteckförmigen Querschnitt auf,

c) an den Längsseiten des Abdeckkörpers sind nut- und federförmige Verbindungselemente vorgesehen und

d) in jedem Rohr ist ein streifenförmiger Wärmeabsorber eingelegt.

Ein Vorteil dieser Anordnung ist besonders die Verbesserung des Wirkungsgrades durch die in die Kollektorrohre eingelegten streifenförmigen Absorber.

Die an der Längsseite angebrachten nut- und federförmigen Anordnungen haben den Vorteil, dass die Kollektoren zu flächenförmigen Einheiten zusammengefügt werden können.

Durch die Kombination dieser einzelnen Merkmale zu einem Kollektorsystem in einem Stück ergeben sich Anordnungen mit Eigenschaften, die bisher nur sehr teure Kollektoren aufwiesen, die trotzdem den Vorteil einer billigen Erzeugung haben. Der Hohlraum zwischen Kollektorsystem und äusserem Abdeckrohr ist so bemessen, dass keine Konvektion der darin befindlichen Luft stattfindet und damit eine minimale Wärmeleitung gewährleistet ist.

Eine Besserung des Wirkungsgrades kann erfindungsgemäss auch dadurch erfolgen, dass die Innenseite des Abdeckrohres mit einer Wandstärkeprofilierung, die einer Fresnel-Linse entspricht, versehen ist. Durch dieses Linsensystem ergibt sich eine Brennlinie, die entlang der Kollektorrohre die Strahlenenergie konzentriert.

Der Vorteil dieser Sonnenkollektoren besteht insbesondere darin, dass sie vollautomatisch durch Extrudieren hergestellt sind, wobei als Material sowohl flexible als auch feste Kunststoffe Verwendung finden können. Ausserdem kann durch die rohrförmige Ausbildung das flüssige Kollektormedium unter Druck stehen, so dass eine Gebrauchswasserbereitung ohne Wärmeaustauscher ermöglicht wird und damit auch die Gesamtkosten reduziert werden können.

Die Erfindung ist an einem Ausführungsbeispiel näher erläutert.

Fig. 1 zeigt einen rechteckförmigen Sonnenkollektor und

Fig. 2 ein Montagebeispiel für rechteckige Sonnenkollektoren.

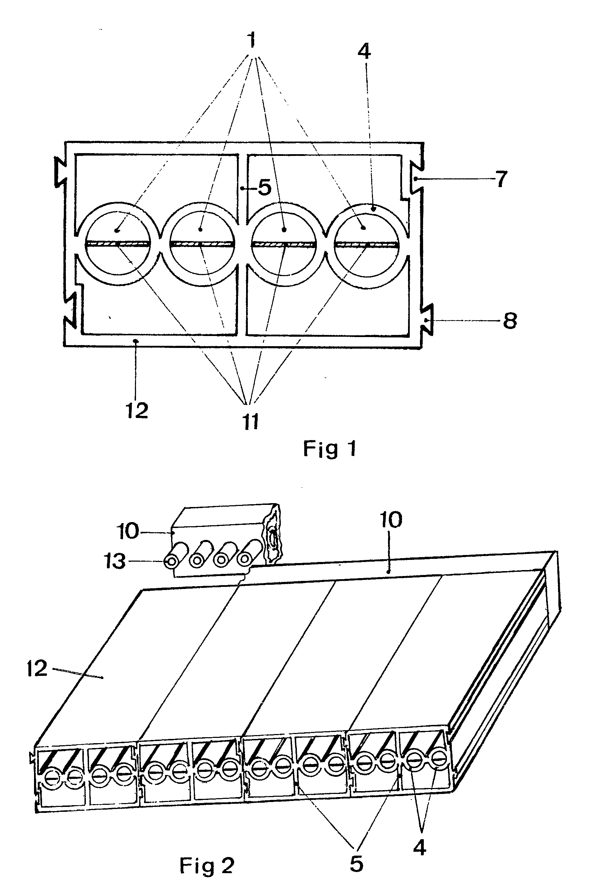

Fig. 1 zeigt eine rechteckförmige Anordnung des äusseren Abdeckrohres 12 mit den seitlich angebrachten nut- und federförmigen Fortsetzungen 7 und 8, die die Rohre untereinander verbinden. Das Kollektormedium fliesst in dem vierfachen Kollektorrohr 4. Die Kammern zwischen den Stegen 5 ergeben eine gute Wärmeisolation. Die Abmessungen dieser Kammern sind so klein gewählt, dass noch keine Luftkonvektion eintreten kann. Innerhalb eines jeden Kollektorrohres ist ein streifenförmiger Wärmeabsorber 11 eingelegt.

Fig. 2 zeigt die Montage der rechteckigen Kollektorabdeckungen 12 mittels den Nut und Federn und den Verbindungsstücken 10, die an den Enden durch Einstecken in die Kollektorrohre diese abschliessen und die Kollektorrohre miteinander verbinden. Die Ansätze 13 sind Passrohre zu den Kollektorrohren, so dass eine absolute Dichtheit gewährleistet ist.

**Patentansprüche**

1. Sonnenkollektor bestehend aus einem Kollektorrohr (4), welches einstückig mit einem dieses umgebenden, durchsichtigen Abdeckkörper (12) und mit zwischen Kollektorrohr (4) und Abdeckkörper (12) angeordneten Stegen (5) aus Kunststoff durch Extrusion hergestellt ist, wobei zwischen Kollektorrohr (4) und Abdeckkörper (12) ein Lufthohlraum gebildet ist und das Kollektorrohr (4) zur Aufnahme eines durchfliessenden, flüssigen, die Sonnenenergie aufnehmenden Mediums (1) dient, gekennzeichnet durch die Kombination folgender Merkmale:

a) das Kollektorrohr (4) besteht aus mehreren nebeneinanderliegenden Rohren aus durchsichtigem Kunststoff,

b) der Abdeckkörper (12) weist einen rechteckförmigen Querschnitt auf,

c) an den Längsseiten des Abdeckkörpers sind nut- (7) und feder-(8) förmige Verbindungselemente vorgesehen und

d) in jedem Rohr ist ein streifenförmiger Wärmeabsorber (11) eingelegt.

2. Anordnung nach Anspruch 1, dadurch gekennzeichnet, dass die Innenseite des Abdeckrohres mit einer Wandstärkeprofilierung, die einer Fresnel-Linse entspricht, versehen ist.

**Claims**

1. Solar collector, consisting of a collector tube (4) manufactured in one piece from plastic material by extrusion moulding with a transparent covering body (12) surrounding it and with webs (5) arranged between collector tube (4) and covering body (12), a hollow air space being formed between collector tube (4) and covering body (12), the collector tube (4) serving for receiving a liquid medium (1) which flows through it and absorbs solar energy, characterized by combination of the following features:

a) the collector tube (4) consists of several pipes of transparent plastic material arranged side by side;

b) the covering body (12) has a rectangular cross-section;

c) groove (7) and tongue (8) connecting elements are provided on either long side of the covering body (12);

d) a heat absorber strip (11) is inserted into each pipe.

2. Arrangement as per Claim No. 1, characterized by the fact that the inside of the covering body is equipped with a wall profile which in its function corresponds to a Fresnel lens.

**Revendications**

1. Capteur solaire caractérisé en ce qu'il est constitué d'un tube capteur (4), d'une couverture transparente (12) entourant le tube capteur (4) et de parois (5) disposés entre le tube capteur (4) et la couverture (12), le tout formant une seule pièce qui a été réalisée en matière plastique par extrusion. Entre le tube capteur (4) et la couverture (12) se trouve un espace vide et c'est à travers le tube capteur (4) que circule un fluide (1) absorbant l'énergie solaire.

Le capteur solaire est caractérisé en ce qu'il associe les caractéristiques suivantes:

a) le tube capteur est constitué de plusieurs tubes en matériau plastique transparent disposés en parallèle,

b) la couverture (12) est de section rectangulaire,

c) les grands cotés comportent des emboîtements en queue d'aronde (7 et 8),

d) dans chaque tube est placé un absorbeur de chaleur en forme de bande (11).

2. Agencement selon revendication 1, caractérisé en ce que la paroi intérieure de l'ensemble couverture/tube est dotée d'un profil réalisé en forme de lentille de Fresnel dans l'épaisseur de la paroi.

Fig 1

Fig 2